# EUROPEAN PATENT SPECIFICATION

(11) **EP 4 060 900 B1**
(45) Date of publication and mention of the grant of the patent: **12.03.2025**
(21) Application number: 20901024.8
(22) Date of filing: 10.12.2020
(51) Int. Cl.: H04B 1/14, H04W 16/14, H04B 1/10, H04L 27/00, H04L 5/00, H04W 76/16

(54) **LOCAL OSCILLATOR CONTROL METHOD AND SYSTEM, SIGNAL TRANSCEIVING METHOD, AND TERMINAL**
VERFAHREN UND SYSTEM ZUR LOKALEN OSZILLATORSTEUERUNG, VERFAHREN FÜR SIGNALÜBERTRAGUNG/-EMPFANG UND ENDGERÄT
PROCÉDÉ ET SYSTÈME DE COMMANDE D'OSCILLATEUR LOCAL, PROCÉDÉ D'ÉMISSION-RÉCEPTION DE SIGNAL ET TERMINAL

(30) Priority: 17.12.2019 CN 201911302009
(43) Date of publication of application: 21.09.2022
(73) Proprietor: ZTE Corporation, Shenzhen, Guangdong 518057 (CN)
(72) Inventor: LI, Long, Shenzhen, Guangdong 518057 (CN)
(74) Representative: Zoli, Filippo
(86) International application number: PCT/CN2020/135302
(87) International publication number: WO 2021/121124

(56) References cited:
- CN-A- 104 135 296
- CN-A- 108 051 867
- CN-A- 108 566 621
- CN-A- 108 988 876
- CN-A- 110 098 850
- US-A1- 2015 105 038
- US-A1- 2018 219 587
- US-A1- 2019 238 167
- US-A1- 2019 280 759
- US-B1- 7 155 196
- CATR: "Test system for compact antenna test range (CATR) based on probe scanning method", 3GPP DRAFT; R4-1712384, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Reno, US; 20171127 - 20171201, 16 November 2017 (2017-11-16), Mobile Competence Centre ; 650, route des Lucioles ; F-06921 Sophia-Antipolis Cedex ; France, XP051373925

## Description

### TECHNICAL FIELD

The present disclosure relates to the technical field of communication, and in particular to a local oscillator control method and system, a signal transceiving method, a terminal device, a computer-readable storage medium and an electronic device.

### BACKGROUND

With the further development of 5G industry, millimeter wave terminal devices will become popular. A double-conversion signal transceiving method is generally adopted in the existing millimeter wave terminal schemes. That is, baseband signals are firstly up-converted into intermediate-frequency (IF) signals, and the IF signals are then up-converted into radio frequency (RF) signals in millimeter wave frequency bands. According to the requirements for the rate of FR2 frequency bands in the 3GPP specification and the implementability of the circuit, the frequency of IF signals is generally selected within the range of 10 GHz or less. In the nonstandalone (NSA) mode, LTE frequency bands may generate harmonic and intermodulation interference with millimeter wave IF signals; and in the NR CA mode, Sub-6G frequency modes may also generate harmonic and intermodulation interference with millimeter wave IF signals. Due to various frequency bands and complex frequency combinations, these interferences are often difficult to avoid. Therefore, how to resist interference becomes a technical problem to be solved urgently at present.

US2015105038A1 relates to apparatuses and methods for simultaneously operating as a wireless radio and monitoring the local frequency spectrum. For example, described are wireless radio devices that use a secondary receiver to monitor frequencies within the operating band and prevent or avoid interferers, including in particular half-IF interferers.

US7155196B1 relates to a method and apparatus for optimizing performance of a transceiver selecting and processing an intermediate frequency free of significant interference, such as noise. A frequency band may be scanned to detect interference upon which an intermediate frequency free of significant interference may be selected.

US2019238167A1 relates to a wireless communication device, which includes a first wireless communication system and a second wireless communication system. Regarding the first wireless communication system, an up-conversion circuit up-converts a first transmit (TX) signal in a baseband to generate a second TX signal with a first carrier frequency, and a front-end circuit transmits the second TX signal to another wireless communication device.

US2018219587A1 relates to systems and methods for distributed phased array multiple input multiple output (DPA-MIMO) communications. A system may comprise a baseband processing unit; a plurality of beamforming (BF) modules each of which comprises at least a beamforming antenna and a transceiver circuit comprising at least a downconverter that downconverts a beamformed antenna radio frequency signal to an intermediate frequency signal, and an upconverter that upconverts an intermediate frequency signal to radio frequency and sends to said beamforming antenna for transmission; a plurality of intermediate frequency (IF) radios, each of which comprises a receive chain circuit that includes at least a downconverter that downconverts an intermediate frequency signal sent from said BF module to a basedband signal conveyed to said baseband processing unit, and a transmit chain circuit that includes at least an upconverter that upconverts a baseband signal received from said baseband processing unit to an intermediate frequency signal which is conveyed to said beamforming module; and a plurality of cables or any type of physical signal transmission medium, each of which connects one of said beamforming modules with one of said intermediate frequency radios.

### SUMMARY

The invention is set out in the appended set of claims.

In order to solve at least one of the technical problems in the existing technology, the present disclosure provides a local oscillator control method and system, a signal transceiving method and a terminal device, which can adaptively adjust a frequency point of a local oscillator signal according to different scenes so as to avoid interference between an intermediate-frequency signal matched with this local oscillator signal and an operating frequency band in the current scene.

### BRIEF DESCRIPTION OF DRAWINGS

FIG. 1 is a flowchart of a local oscillator control method according to a first embodiment of the present disclosure;
FIG. 2 is a flowchart of a local oscillator control method according to a second embodiment of the present disclosure;
FIG. 3 is another flowchart of the local oscillator control method according to the second embodiment of the present disclosure;
FIG. 4 is a schematic block diagram of a local oscillator control system according to a third embodiment of the present disclosure;
FIG. 5 is a schematic block diagram of a terminal according to a fourth embodiment of the present disclosure;
FIG. 6 is a connection diagram of an intermediate-frequency transmission line according to the fourth embodiment of the present disclosure;
FIG. 7 is a schematic diagram of the transceiving process of an intermediate-frequency signal according to the fourth embodiment of the present disclosure; and
FIG. 8 is a schematic diagram of the transceiving process of a radio frequency signal according to the fourth embodiment of the present disclosure.

### DETAILED DESCRIPTION

In order to make those having ordinary skills in the art better understand the technical schemes of the present disclosure, the local oscillator control method and system, the signal transceiving method and the terminal provided by the present disclosure will be described below in detail with reference to the accompanying drawings.

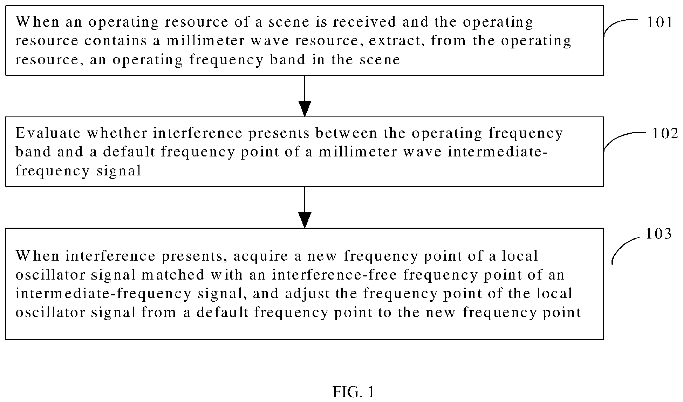

With reference to FIG. 1, a first embodiment of the present disclosure provides a local oscillator control method. The method may include steps S101 to S103.

At S101, when an operating resource of a scene is received and a millimeter wave resource is contained in the operating resource, an operating frequency band for the scene is extracted from the operating resource.

For example, the operating frequency band is an LTE frequency band in the EN-DC mode, a frequency point of a non-millimeter wave NR signal in the NR CA mode, and the like.

S101 plays a role in intelligently identifying a current scene.

At S102, an evaluation is made on whether interference presents between the operating frequency band and a default frequency point of a millimeter wave intermediate-frequency signal; and, if yes, S 103 will be executed.

At S103, a new frequency point of a local oscillator signal matched with an interference-free frequency point of an intermediate-frequency signal is acquired, and the frequency point of the local oscillator signal is adjusted from a default frequency point of the local oscillator signal to the new frequency point.

At S103, the intermediate-frequency signal obtained by up-mixing the local oscillator signal utilizing the new frequency point with a baseband signal or the intermediate-frequency signal obtained by down-mixing the local oscillator signal utilizing the new frequency point with a millimeter wave signal will not interfere with the operating frequency band in the current scene. Thus, in accordance with the local oscillator control method provided in this embodiment, a dynamic adjustment of the frequency point of the local oscillator signal can be realized, so that the frequency point of the local oscillator signal can be adaptively adjusted for different scenes to avoid interference between the intermediate-frequency signal matched with the local oscillator signal and the operating frequency band in the current scene.

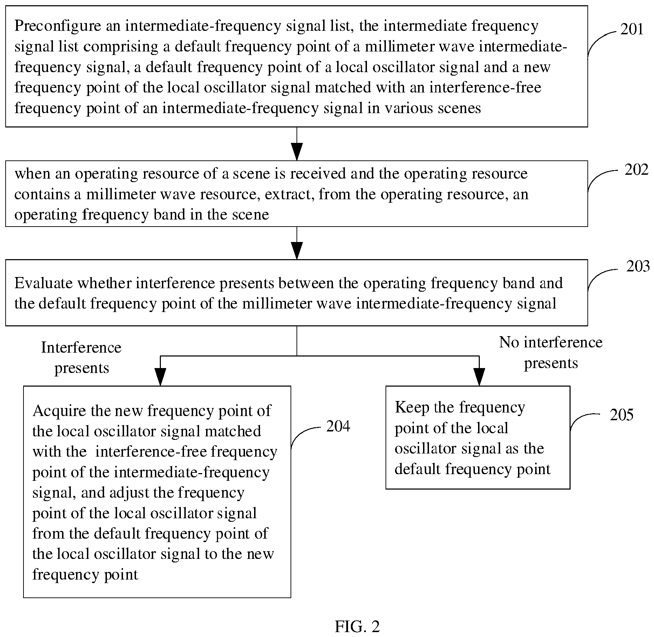

With reference to FIG. 2, a second embodiment of the present disclosure provides a local oscillator control method. The method may include steps S201 to S205.

At S201, an intermediate-frequency signal list is preconfigured, where the intermediate-frequency signal list includes a default frequency point of a millimeter wave intermediate-frequency signal, a default frequency point of a local oscillator signal and a new frequency point of the local oscillator signal matched with an interference-free frequency point of an intermediate-frequency signal in various scenes.

During the configuration process of the intermediate-frequency signal list, all supported scenes related to the millimeter wave frequency band will be evaluated according to the software and hardware conditions of the terminal device, and the most commonly used intermediate-frequency signal configuration is comprehensively selected as a default configuration. The intermediate-frequency signal configuration contains the default frequency point of the millimeter wave intermediate-frequency signal and the default frequency point of the local oscillator signal. Meanwhile, the new frequency point of the local oscillator signal matched with the interference-free frequency point of the intermediate-frequency signal in various scenes is comprehensively calculated, and an intermediate-frequency signal configuration index corresponding to each scene is obtained by mapping.

In an embodiment, the scene includes a dual connection (EN-DC) mode or a new radio carrier aggregation (NR CA) mode of a 4G radio access network and 5G new radio, and the like.

At S202, when an operating resource of a scene is received and a millimeter wave resource is contained in the operating resource, an operating frequency band in the scene is extracted from the operating resource.

For example, the operating frequency band is an LTE frequency band in the EN-DC mode, or a frequency point of a non-millimeter wave NR signal in the NR CA mode.

At S203, an evaluation is made on whether interference presents between the operating frequency band and the default frequency point of the millimeter wave intermediate-frequency signal; if yes, S204 will be executed; and, if no, S205 will be executed.

At S204, a new frequency point of the local oscillator signal matched with the interference-free frequency point of the intermediate-frequency signal is acquired, and the frequency point of the local oscillator signal is adjusted from the default frequency point of the local oscillator signal to the new frequency point.

At S205, the frequency point of the local oscillator signal is kept as the default frequency point.

At S204, the local oscillator signal utilizing the new frequency point is subjected to frequency conversion, so that the intermediate-frequency signal obtained by frequency conversion will not interfere with the operating frequency band in the current scene. Thus, in accordance with the local oscillator control method provided in this embodiment, a dynamic adjustment of the frequency point of the local oscillator signal can be realized, so that the frequency point of the local oscillator signal can be adaptively adjusted for different scenes to avoid interference between the intermediate-frequency signal matched with the local oscillator signal and the operating frequency band in the current scene.

During the execution of S204, the new frequency point of the local oscillator signal corresponding to the current scene can be selected from the intermediate-frequency signal configuration index according to this scene. Of course, in practical applications, the new frequency point of the local oscillator signal can also be obtained by any other methods, which will not be limited by the embodiment.

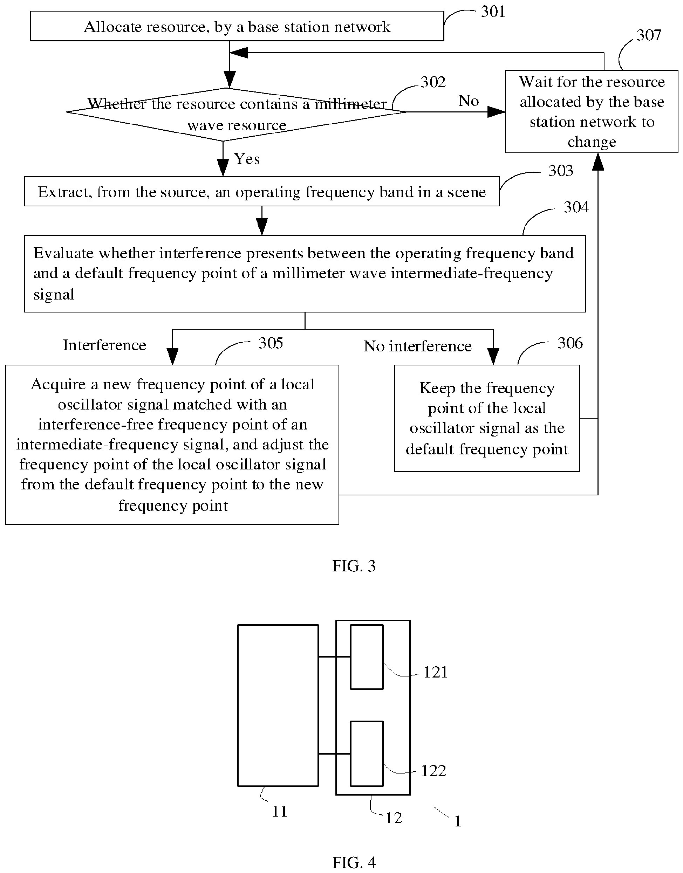

With reference to FIG. 3, in an embodiment, the local oscillator control method according to the second embodiment of the present disclosure includes steps S301 to S307.

At S301, an operating resource allocated by a base station network is received.

At S302, whether the operating resource contains a millimeter wave resource is determined; if yes, S203 will be executed; and, if no, S208 will be executed.

At S303, an operating frequency band in a scene is extracted from the operating resource.

At S304, whether interference presents between the operating frequency band and a default frequency point of a millimeter wave intermediate-frequency signal is evaluated; if yes, S305 will be executed; and, if no, S306 will be executed.

At S305, a new frequency point of a local oscillator signal matched with an interference-free frequency point of an intermediate-frequency signal is acquired, and the frequency point of the local oscillator signal is adjusted from a default frequency point of the local oscillator signal to the new frequency point.

At S306, the frequency point of the local oscillator signal is kept as the default frequency point.

At S307, waiting for receiving a new resource allocated by the base station network (the new resource is changed relative to the original operating resource) is performed.

With reference to FIG. 4, according to a third embodiment of the present disclosure, provided is a local oscillator control system 1. The system 1 may include a central control unit 11 and a local oscillator control unit 12. When an operating resource of a scene is received and the operating resource contains a millimeter wave resource, the central control unit 11 is configured to extract, from the operating resource, an operating frequency band in the scene, and evaluate whether interference presents between the operating frequency band and a default frequency point of a millimeter wave intermediate-frequency signal.

If interference presents, the central control unit 11 acquires a new frequency point of a local oscillator signal matched with an interference-free frequency point of an intermediate-frequency signal, and controls the local oscillator control unit 12 to adjust the frequency point of the local oscillator signal from a default frequency point of the local oscillator signal to the new frequency point.

If no interference presents, the central control unit 11 controls the local oscillator control unit 12 to adjust and keep the frequency point of the local oscillator signal as the default frequency point.

In accordance with the local oscillator control system 1 provided in this embodiment, a dynamic adjustment of the frequency point of the local oscillator signal can be realized, so that the frequency point of the local oscillator signal can be adaptively adjusted for different scenes to avoid interference between the intermediate-frequency signal matched with the local oscillator signal and the operating frequency band in the current scene.

In this embodiment, the local oscillator control unit 12 includes a first sub-unit 121 and a second sub-unit 122. The first sub-unit 121 is configured to adjust a frequency point of a first local oscillator signal under the control of the central control unit 11, mix the first local oscillator signal with a baseband signal received by a mainboard module to form an intermediate-frequency signal, and mix the first local oscillator signal with an intermediate-frequency signal received by the mainboard module to form a baseband signal.

The second sub-unit 122 is configured to adjust a frequency point of a second local oscillator signal under the control of the central control unit 11, mix the second local oscillator signal with an intermediate-frequency signal received by a millimeter wave module to form a millimeter wave signal, and mix the second local oscillator signal with a millimeter wave signal received by the millimeter wave module to form an intermediate-frequency signal.

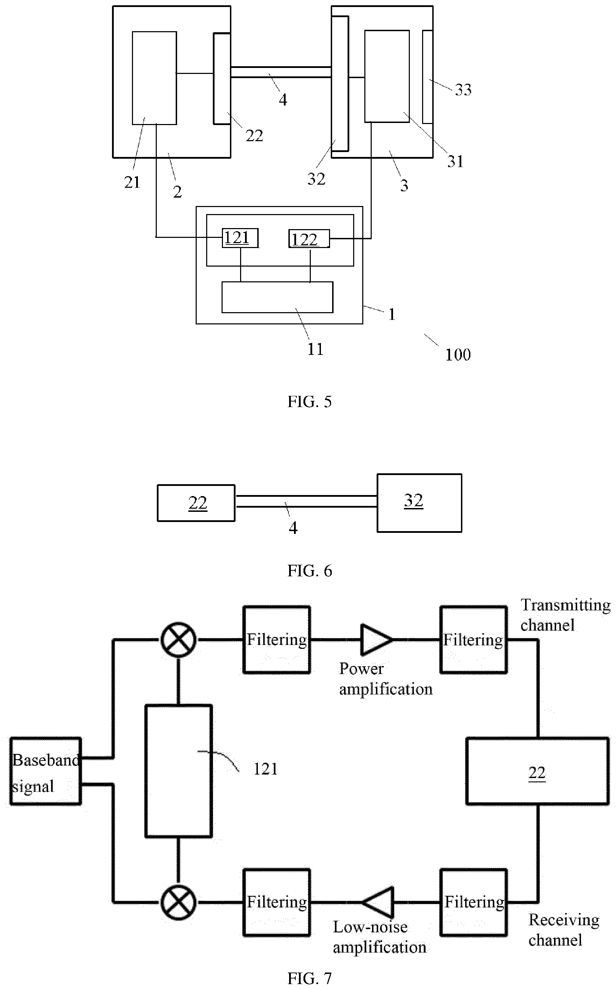

With reference to FIGS. 5 and 6, according to a fourth embodiment of the present disclosure, provided is a terminal 100. The terminal 100 is applicable to a millimeter wave terminal and includes a mainboard module 2, an intermediate-frequency transmission line 4, a millimeter wave module 3 and a local oscillator control system 1. The local oscillator control system 1 is the local oscillator control system 1 according to the third embodiment of the present disclosure.

The local oscillator control system 1 is configured to, when the mainboard module 2 receives a baseband signal, mix a first local oscillator signal with the baseband signal to form an intermediate-frequency signal; when the mainboard module 2 receives an intermediate-frequency signal, mix the first local oscillator signal with the received intermediate-frequency signal to form a baseband signal; when the millimeter wave module 3 receives an intermediate-frequency signal transmitted by the mainboard module 2, mix a second local oscillator signal with the intermediate-frequency signal to form a millimeter wave signal; and, when the millimeter wave module 3 receives a millimeter wave signal, mix the second local oscillator signal with the millimeter wave signal to form an intermediate-frequency signal.

In this embodiment, as shown in FIG. 5, the mainboard module 2 includes an intermediate-frequency transceiving unit 21 and a mainboard side connector 22. The millimeter wave module 3 includes a radio frequency transceiving unit 31, a millimeter wave module side connector 32, a switch control unit 34 and an antenna unit 33. As shown in FIG. 6, intermediate-frequency signals are transmitted between the mainboard side connector 22 and the millimeter wave module side connector 32 through the intermediate-frequency transmission line 4.

The intermediate-frequency transmission line 4 includes a coaxial cable, a flexible circuit board, and the like. The flexible circuit board may be made of a high-frequency flexible printed circuit board (FPC), a liquid crystal polymer (LCP), and the like.

In this embodiment, as shown in FIG. 7, when the intermediate-frequency transceiving unit 21 receives a baseband signal, the first sub-unit 121 mixes the first local oscillator signal with the baseband signal to form an intermediate-frequency signal. The first sub-unit 121 adjusts the frequency point of the first local oscillator signal under the control of the central control unit 11, so that the frequency point of the intermediate-frequency signal formed by frequency mixing will not interfere with the operating frequency band in the current scene.

The intermediate-frequency transceiving unit 21 filters the intermediate-frequency signal obtained after frequency mixing and then transmits the signal to the millimeter wave module side connector 21 through the mainboard side connector 22 and the intermediate-frequency transmission line 4. The intermediate-frequency transceiving unit 21 successively performs primary filtering, amplification and secondary filtering on the intermediate-frequency signal formed by mixing with the baseband signal.

When the mainboard side connector 22 receives the intermediate-frequency signal from the millimeter wave module side connector 32, the intermediate-frequency transceiving unit 21 filters the intermediate-frequency signal. The intermediate-frequency transceiving unit 21 successively performs primary filtering, amplification and secondary filtering on the intermediate-frequency signal received by the mainboard side connector 22.

The first sub-unit 121 mixes the filtered first local oscillator signal with the intermediate-frequency signal to form a baseband signal.

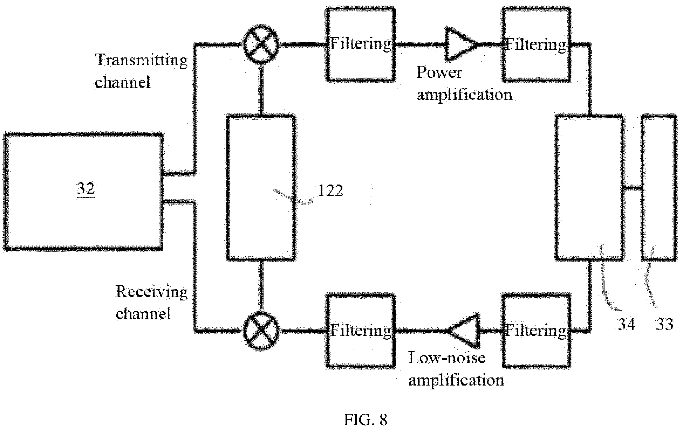

As shown in FIG. 8, when the millimeter wave module side connector 32 receives the intermediate-frequency signal transmitted by the mainboard side connector 22, the second sub-unit 122 mixes the second local oscillator with the intermediate-frequency signal to form a millimeter wave signal.

The radio frequency transceiving unit 31 filters the millimeter wave signal formed by frequency mixing, and then transmits the millimeter wave signal successively through the switch control unit 34 and the antenna unit 33. The radio frequency transceiving unit 31 successively performs primary filtering, amplification and secondary filtering on the millimeter wave signal.

When the antenna unit 33 receives the millimeter wave signal, the radio frequency transceiving unit 31 filters the millimeter wave signal. The radio frequency transceiving unit 31 successively performs primary filtering, low-noise amplification and secondary filtering on the millimeter wave signal.

The second sub-unit 122 mixes the second local oscillator signal with the millimeter wave signal to form an intermediate-frequency signal. The second sub-unit 12 adjusts the frequency point of the second local oscillator signal under the control of the central control unit 11, so that the frequency point of the intermediate-frequency signal formed by frequency mixing will not interfere with the operating frequency band in the current scene. The millimeter wave module side connector 32 transmits the intermediate-frequency signal obtained after frequency mixing to the mainboard side connector 22 through the intermediate-frequency transmission line 4.

In accordance with the terminal 100 provided in this embodiment, by adopting the local oscillator signal system 1 provided in the second embodiment, the frequency point of the local oscillator signal can be adaptively adjusted for different scenes to avoid interference between the intermediate-frequency signal matched with the local oscillator signal and the operating frequency band in the current scene.

As another technical scheme, this embodiment further provides a signal transceiving method. By taking transceiving signals by the terminal provided in the fourth embodiment as an example, as shown in FIG. 5, the signal transceiving method includes steps of: when a mainboard module 2 receives a baseband signal, mixing a first local oscillator signal with the baseband signal to form an intermediate-frequency signal; when the mainboard module 2 receives an intermediate-frequency signal, mixing the first local oscillator signal with the received intermediate-frequency signal to form a baseband signal; when the millimeter wave module 3 receiving an intermediate-frequency signal transmitted by the mainboard module 2, mixing a second local oscillator signal with the intermediate-frequency signal to form a millimeter wave signal; and, when the millimeter wave module 3 receives a millimeter wave signal, mixing the second local oscillator signal with the millimeter wave signal to form an intermediate-signal signal.

In the signal transceiving method provided in this embodiment, the frequency points of the first local oscillator signal and the second local oscillator signal are controlled by the local oscillator control method provided in the first embodiment.

In accordance with the signal transceiving method provided in this embodiment, by adopting the local oscillator control method provided in the first embodiment, the frequency point of the local oscillator signal can be adaptively adjusted for different scenes to avoid interference between the intermediate-frequency signal matched with the local oscillator signal and the operating frequency band in the current scene.

As another technical scheme, this embodiment of the present disclosure further provides a computer-readable storage medium configured to store executable programs which, when executed by a processor, cause the processor to carry out the local oscillator control method according to the embodiments of the present disclosure or the signal transceiving method according to the embodiments of the present disclosure.

The computer-readable storage medium includes volatile or non-volatile and removable or non-removable mediums implemented in any method or technology used to store information (such as computer-readable instructions, data structures, program modules or other data). The computer-readable storage medium includes, but not limited to, RAMs, ROMs, EEPROMs, flash memories or other memory technologies, CD-ROMs, digital video disks (DVDs) or other optical disk storages, magnetic cassettes, magnetic tapes, magnetic disk storages or other magnetic storage devices, or any other mediums which can be used to store desired information and can be accessed by computers.

In accordance with the computer-readable storage medium according to this embodiment of the present disclosure, by evaluating whether interference presents between the operating frequency band in the current scene and the default frequency point of the millimeter wave intermediate-frequency signal, acquiring the new frequency point of the local oscillator signal matched with the interference-free frequency point of the intermediate-frequency signal when there is interference, and adjusting the frequency point of the local oscillator signal from the default frequency point to the new frequency point, dynamic adjustment of the frequency point of the local oscillator signal can be realized, so that the frequency point of the local oscillator signal can be adaptively adjusted for different scenes to avoid interference between the intermediate-frequency signal matched with the local oscillator signal and the operating frequency band in the current scene.

As another technical scheme, this embodiment of the present disclosure further provides an electronic device. The electronic device may include a storage module and one or more first processors.

The storage module has first application programs and/or second application programs stored thereon. The first application programs, when executed by the one or more first processors, cause the one or more first processors to carry out the local oscillator control method according to the embodiments of the present disclosure. The second application programs, when executed by the one or more first processors, cause the one or more first processors to carry out the signal transceiving method according to the embodiments of the present disclosure.

In accordance with the electronic device according to this embodiment of the present disclosure, by evaluating whether interference presents between the operating frequency band in the current scene and the default frequency point of the millimeter wave intermediate-frequency signal, acquiring the new frequency point of the local oscillator signal matched with the frequency point of the interference-free intermediate-frequency signal when interference presents, and adjusting the frequency point of the local oscillator signal from the default frequency point to the new frequency point, the dynamic adjustment of the frequency point of the local oscillator signal can be realized, so that the frequency point of the local oscillator signal can be adaptively adjusted for different scenes to avoid interference between the intermediate-frequency signal matched with the local oscillator signal and the operating frequency band in the current scene.

## Claims

1. A local oscillator control method, comprising:
in response to receiving an operating resource of a scene and determining that the operating resource contains a millimeter wave resource, extracting, from the operating resource, an operating frequency band in the scene that is different from the millimeter wave resource (101);
evaluating whether interference presents between the operating frequency band and a default frequency point of an intermediate-frequency signal associated with the millimeter wave resource (102); and
in response to a presence of interference, acquiring a new frequency point of a local oscillator signal matched with an interference-free frequency point of an intermediate-frequency signal, and adaptively adjusting the frequency point of the local oscillator signal from a default frequency point of the local oscillator signal to the new frequency point (103).

2. The local oscillator control method of claim 1, further comprising:
preconfiguring an intermediate-frequency signal list, the intermediate-frequency signal list comprising the default frequency point of the intermediate-frequency signal associated with the millimeter wave resource, the default frequency point of the local oscillator signal and the new frequency point of the local oscillator signal matched with the interference-free frequency point of the intermediate-frequency signal in various scenes (201); and
in response to the presence of interference, acquiring the new frequency point of the local oscillator signal matched with the interference-free frequency point of the intermediate-frequency signal and adaptively adjusting the frequency point of the local oscillator signal from the default frequency point of the local oscillator signal to the new frequency point comprises:
in response to the presence of interference, selecting the new frequency point of the local oscillator signal matched with a current scene from the intermediate-frequency signal list, and adjusting the frequency point of the local oscillator signal from the default frequency point to the new frequency point.

3. The local oscillator control method of claim 1, wherein the scene comprises a dual connection mode or a new radio carrier aggregation mode of a 4G radio access network and 5G new radio.

4. The local oscillator control method of claim 1, further comprising:
in response to an absence of interference, keeping the frequency point of the local oscillator signal as the default frequency point of the local oscillator signal.

5. A signal transceiving method, comprising:
in response to a mainboard module receiving a baseband signal, mixing a first local oscillator signal with the baseband signal to form an intermediate-frequency signal; and, in response to the mainboard module receiving an intermediate-frequency signal, mixing the first local oscillator signal with the received intermediate-frequency signal to form a baseband signal; and
in response to a millimeter wave module receiving an intermediate-frequency signal transmitted by the mainboard module, mixing a second local oscillator signal with the intermediate-frequency signal to form a millimeter wave signal; and, in response to the millimeter wave module receiving a millimeter wave signal, mixing the second local oscillator signal with the millimeter wave signal to form an intermediate-signal signal; and
wherein the frequency points of the first local oscillator signal and the second local oscillator signal are controlled by the local oscillator control method of any one of claims 1 to 4.

6. A local oscillator control system, comprising a central control unit (11) and a local oscillator control unit (12), wherein:
the central control unit (11) is configured to: in response to receiving an operating resource of a scene and determining that the operating resource contains a millimeter wave resource, extract, from the operating resource, an operating frequency band in the scene that is different from the millimeter wave resource;
evaluate whether interference presents between the operating frequency band and a default frequency point of an intermediate-frequency signal associated with the millimeter wave resource; and,
in response to a presence of interference, acquire a new frequency point of a local oscillator signal matched with an interference-free frequency point of an intermediate-frequency signal, and control the local oscillator control unit to adaptively adjust the frequency point of the local oscillator signal from a default frequency point of the local oscillator signal to the new frequency point.

7. A terminal device, comprising a mainboard module (2), an intermediate-frequency transmission line (4), a millimeter wave module (3) and the local oscillator control system (1) of claim 6, wherein intermediate-frequency signals are transmitted between the mainboard module(2) and the millimeter wave module (3) through the intermediate-frequency transmission line (4); and
the local oscillator control system (1) is configured to: in response to the mainboard module (2) receiving a baseband signal, mix a first local oscillator signal with the baseband signal to form an intermediate-frequency signal; in response to the mainboard module (2) receiving an intermediate-frequency signal, mix the first local oscillator signal with the received intermediate-frequency signal to form a baseband signal; in response to the millimeter wave module (3) receiving an intermediate-frequency signal transmitted by the mainboard module (2), mix a second local oscillator signal with the intermediate-frequency signal to form a millimeter wave signal; and, in response to the millimeter wave module (2) receiving a millimeter wave signal, mix the second local oscillator signal with the millimeter wave signal to form an intermediate-frequency signal.

8. The terminal of claim 7, wherein the intermediate-frequency transmission line (4) comprises a coaxial cable or a flexible circuit board.

9. A computer-readable storage medium configured to store executable programs which, when executed by a processor, cause the processor to carry out the local oscillator control method of any one of claims 1 to 4 or the signal transceiving method of claim 5.

10. An electronic device, comprising:
a storage module having first application programs and/or second application programs stored thereon, and
one or more first processors, wherein the first application programs, when executed by the one or more first processors, cause the one or more first processors to carry out the local oscillator control method of any one of claims 1 to 4, and the second application programs, when executed by the one or more first processors, cause the one or more first processors to carry out the signal transceiving method of claim 5.

## Patentansprüche

1. Verfahren zum Steuern eines Lokaloszillators, Folgendes umfassend:
in Reaktion auf das Empfangen einer Betriebsressource einer Szene und das Bestimmen, dass die Betriebsressource eine Millimeterwellenressource enthält, Extrahieren eines Betriebsfrequenzbandes in der Szene, das sich von der Millimeterwellenressource unterscheidet, aus der Betriebsressource (101),
Beurteilen, ob zwischen dem Betriebsfrequenzband und einem standardmäßigen Frequenzpunkt eines Zwischenfrequenzsignals, welcher der Millimeterwellenressource zugeordnet ist, Interferenz vorhanden ist (102), und
in Reaktion auf ein Vorhandensein von Interferenz Erfassen eines neuen Frequenzpunktes eines Lokaloszillatorsignals, der mit einem interferenzfreien Frequenzpunkt eines Zwischenfrequenzsignals abgeglichen ist, und adaptives Justieren des Frequenzpunktes des Lokaloszillatorsignals von einem standardmäßigen Frequenzpunkt des Lokaloszillatorsignals auf den neuen Frequenzpunkt (103).

2. Verfahren zum Steuern eines Lokaloszillators nach Anspruch 1, ferner Folgendes umfassend:
Vorkonfigurieren einer Zwischenfrequenzsignalliste, wobei die Zwischenfrequenzsignalliste den voreingestellten Frequenzpunkt des Zwischenfrequenzsignals, welcher der Millimeterwellenressource zugeordnet ist, den standardmäßigen Frequenzpunkt des Lokaloszillatorsignals und den neuen Frequenzpunkt des Lokaloszillatorsignals, der mit dem interferenzfreien Frequenzpunkt des Zwischenfrequenzsignals in verschiedenen Szenen abgeglichen ist, umfasst (201), und
das Erfassen des neuen Frequenzpunktes des Lokaloszillatorsignals, der mit dem interferenzfreien Frequenzpunkt des Zwischenfrequenzsignals abgeglichen ist, in Reaktion auf das Vorhandensein von Interferenz und das adaptive Justieren des Frequenzpunktes des Lokaloszillatorsignals von dem standardmäßigen Frequenzpunkt des Lokaloszillatorsignals auf den neuen Frequenzpunkt Folgendes umfasst:
in Reaktion auf das Vorhandensein von Interferenz Auswählen des neuen Frequenzpunktes des Lokaloszillatorsignals, der mit einer aktuellen Szene abgeglichen ist, aus der Zwischenfrequenzsignalliste und Justieren des Frequenzpunkts des Lokaloszillatorsignals von dem standardmäßigen Frequenzpunkt auf den neuen Frequenzpunkt.

3. Verfahren zum Steuern eines Lokaloszillators nach Anspruch 1, wobei die Szene einen Dual-Verbindungsmodus oder einen Neuer-Funkträger-Aggregationsmodus eines 4G-Funkzugangsnetzes und 5G New Radio umfasst.

4. Verfahren zum Steuern eines Lokaloszillators nach Anspruch 1, ferner Folgendes umfassend:
in Reaktion auf das Nichtvorhandensein von Interferenz Beibehalten des Frequenzpunkts des Lokaloszillatorsignals als den standardmäßigen Frequenzpunkt des Lokaloszillatorsignals.

5. Verfahren zum Senden und Empfangen von Signalen, Folgendes umfassend:
in Reaktion darauf, dass ein Hauptplatinenmodul ein Basisbandsignal empfängt, Mischen eines ersten Lokaloszillatorsignals mit dem Basisbandsignal, um ein Zwischenfrequenzsignal zu bilden, und in Reaktion darauf, dass das Hauptplatinenmodul ein Zwischenfrequenzsignal empfängt, Mischen des ersten Lokaloszillatorsignals mit dem empfangenen Zwischenfrequenzsignal, um ein Basisbandsignal zu bilden, und
in Reaktion darauf, dass ein Millimeterwellenmodul ein Zwischenfrequenzsignal empfängt, das von dem Hauptplatinenmodul übertragen wird, Mischen eines zweiten Lokaloszillatorsignals mit dem Zwischenfrequenzsignal, um ein Millimeterwellensignal zu bilden, und in Reaktion darauf, dass das Millimeterwellenmodul ein Millimeterwellensignal empfängt, Mischen des zweiten Lokaloszillatorsignals mit dem Millimeterwellensignal, um ein Zwischensignalsignal zu bilden, und
wobei die Frequenzpunkte des ersten Lokaloszillatorsignals und des zweiten Lokaloszillatorsignals durch das Verfahren zum Steuern eines Lokaloszillators nach einem der Ansprüche 1 bis 4 gesteuert werden.

6. System zum Steuern eines Lokaloszillators, eine zentrale Steuereinheit (11) und eine Lokaloszillator-Steuereinheit (12) umfassend, wobei:
die zentrale Steuereinheit (11) für Folgendes konfiguriert ist:
in Reaktion auf das Empfangen einer Betriebsressource einer Szene Bestimmen, dass die Betriebsressource eine Millimeterwellenressource enthält, Extrahieren eines Betriebsfrequenzbandes in der Szene, das sich von der Millimeterwellenressource unterscheidet, aus der Betriebsressource,
Beurteilen, ob zwischen dem Betriebsfrequenzband und einem standardmäßigen Frequenzpunkt eines Zwischenfrequenzsignals, welcher der Millimeterwellenressource zugeordnet ist, Interferenz vorhanden ist, und
in Reaktion auf ein Vorhandensein von Interferenz Erfassen eines neuen Frequenzpunktes eines Lokaloszillatorsignals, der mit einem interferenzfreien Frequenzpunkt eines Zwischenfrequenzsignals abgeglichen ist, und Steuern der Lokaloszillator-Steuereinheit zum adaptiven Justieren des Frequenzpunktes des Lokaloszillatorsignals von einem standardmäßigen Frequenzpunkt des Lokaloszillatorsignals auf den neuen Frequenzpunkt.

7. Endgerät, ein Hauptplatinenmodul (2), eine Zwischenfrequenz-Übertragungsleitung (4), ein Millimeterwellenmodul (3) und das System (1) zum Steuern eines Lokaloszillators nach Anspruch 6 umfassend, wobei durch die Zwischenfrequenz-Übertragungsleitung (4) Zwischenfrequenzsignale zwischen dem Hauptplatinenmodul (2) und dem Millimeterwellenmodul (3) übertragen werden, und wobei das System (1) zum Steuern eines Lokaloszillators für Folgendes konfiguriert ist: in Reaktion darauf, dass das Hauptplatinenmodul (2) ein Basisbandsignal empfängt, Mischen eines ersten Lokaloszillatorsignals mit dem Basisbandsignal, um ein Zwischenfrequenzsignal zu bilden, und in Reaktion darauf, dass das Hauptplatinenmodul (2) ein Zwischenfrequenzsignal empfängt, Mischen des ersten Lokaloszillatorsignals mit dem empfangenen Zwischenfrequenzsignal, um ein Basisbandsignal zu bilden, in Reaktion darauf, dass das Millimeterwellenmodul (3) ein Zwischenfrequenzsignal empfängt, das von dem Hauptplatinenmodul (2) übertragen wird, Mischen eines zweiten Lokaloszillatorsignals mit dem Zwischenfrequenzsignal, um ein Millimeterwellensignal zu bilden, und in Reaktion darauf, dass das Millimeterwellenmodul (2) ein Millimeterwellensignal empfängt, Mischen des zweiten Lokaloszillatorsignals mit dem Millimeterwellensignal, um ein Zwischenfrequenzsignal zu bilden.

8. Endgerät nach Anspruch 7, wobei die Zwischenfrequenz-Übertragungsleitung (4) ein Koaxialkabel oder eine flexible Leiterplatte umfasst.

9. Computerlesbares Speichermedium, das dafür konfiguriert ist, ausführbare Programme zu speichern die bei Ausführung durch einen Prozessor den Prozessor veranlassen, das Verfahren zum Steuern eines Lokaloszillators nach einem Ansprüche 1 bis 4 oder das Verfahren zum Senden und Empfangen von Signalen nach Anspruch 5 auszuführen.

10. Elektronische Vorrichtung, Folgendes umfassend:
ein Speichermodul, auf dem erste Anwendungsprogramme und/oder zweite Anwendungsprogramme gespeichert sind, und
einen oder mehrere erste Prozessoren, wobei die ersten Anwendungsprogramme bei Ausführung durch den einen oder die mehreren ersten Prozessoren den einen oder die mehreren ersten Prozessoren veranlassen, das Verfahren zum Steuern eines Lokaloszillators nach einem Ansprüche 1 bis 4 auszuführen, und die zweiten Anwendungsprogramme bei Ausführung durch den einen oder die mehreren Prozessoren den einen oder die mehreren ersten Prozessoren veranlassen, das Verfahren zum Senden und Empfangen von Signalen nach Anspruch 5 auszuführen.

## Revendications

1. Méthode de commande de l'oscillateur local, comprenant :
en réponse à la réception d'une ressource d'exploitation d'une scène et après avoir déterminé que la ressource d'exploitation contient une ressource d'ondes millimétriques, l'extraction, à partir de la ressource d'exploitation, d'une bande de fréquences d'exploitation dans la scène qui est différente de la ressource d'ondes millimétriques (101) ;
l'évaluation de l'existence d'interférences entre la bande de fréquences de fonctionnement et un point de fréquence par défaut d'un signal de fréquence intermédiaire associé à la ressource d'ondes millimétriques (102) ; et
en réponse à une présence d'interférence, l'acquisition d'un nouveau point de fréquence d'un signal de l'oscillateur local correspondant à un point de fréquence sans interférence d'un signal de fréquence intermédiaire, et l'ajustement par adaptation du point de fréquence du signal de l'oscillateur local à partir d'un point de fréquence par défaut du signal de l'oscillateur local jusqu'au nouveau point de fréquence (103).

2. Méthode de commande de l'oscillateur local selon la revendication 1, comprenant en outre :
la préconfiguration d'une liste de signaux à fréquence intermédiaire, la liste de signaux de fréquence intermédiaire comprenant le point de fréquence par défaut du signal de fréquence intermédiaire associé à la ressource d'ondes millimétriques, le point de fréquence par défaut du signal de l'oscillateur local et le nouveau point de fréquence du signal de l'oscillateur local correspondant au point de fréquence sans interférence du signal de fréquence intermédiaire dans diverses scènes (201) ; et
en réponse à la présence d'interférence, l'acquisition du nouveau point de fréquence du signal de l'oscillateur local correspondant au point de fréquence sans interférence du signal de fréquence intermédiaire, et l'ajustement par adaptation du point de fréquence du signal de l'oscillateur local à partir du point de fréquence par défaut du signal de l'oscillateur local jusqu'au nouveau point de fréquence :
en réponse à la présence d'interférence, la sélection du nouveau point de fréquence du signal de l'oscillateur local correspondant à une scène actuelle à partir de la liste du signal de fréquence intermédiaire, et l'ajustement du point de fréquence du signal de l'oscillateur local à partir d'un point de fréquence par défaut jusqu'au nouveau point de fréquence.

3. Méthode de commande de l'oscillateur local selon la revendication 1, dans laquelle la scène comprend un mode de double connexion ou un nouveau mode d'agrégation de porteuses radio d'un réseau d'accès radio 4G et d'une nouvelle radio 5G.

4. Méthode de commande de l'oscillateur local selon la revendication 1, comprenant en outre :
en réponse à une absence d'interférence, conserver le point de fréquence du signal de l'oscillateur local comme point de fréquence par défaut du signal de l'oscillateur local.

5. Méthode d'émission-réception de signaux, comprenant :
en réponse à un module de carte mère qui reçoit un signal en bande de base, mélanger un premier signal de l'oscillateur local avec le signal en bande de base pour former un signal de fréquence intermédiaire ; et, en réponse à un module de carte mère qui reçoit un signal de fréquence intermédiaire, mélanger le premier signal de l'oscillateur local avec le signal de fréquence intermédiaire reçu pour former un signal en bande de base ; et
en réponse à un module à ondes millimétriques qui reçoit un signal de fréquence intermédiaire transmis par le module de carte mère, mélanger un deuxième signal de l'oscillateur local avec le signal de fréquence intermédiaire pour former un signal d'ondes millimétriques ; et, en réponse à un module d'ondes millimétriques qui reçoit un signal d'ondes millimétriques, mélanger le deuxième signal de l'oscillateur local avec le signal d'ondes millimétriques pour former un signal de signal intermédiaire ; et
dans laquelle les points de fréquence du premier signal d'oscillateur local et le deuxième signal d'oscillateur local sont commandés par la méthode de commande d'oscillateur local selon l'une quelconque des revendications 1 à 4.

6. Système de commande d'oscillateur local, comprenant une unité de commande centrale (11) et une unité de commande d'oscillateur local (12) dans lequel :
l'unité de commande centrale (11) est configurée pour : en réponse à la réception d'une ressource d'exploitation d'une scène et après avoir déterminé que la ressource d'exploitation contient une ressource d'ondes millimétriques, extraire, à partir de la ressource d'exploitation, une bande de fréquences d'exploitation dans la scène qui est différente de la ressource d'ondes millimétriques ;
évaluer l'existence d'interférences entre la bande de fréquences de fonctionnement et un point de fréquence par défaut d'un signal de fréquence intermédiaire associé à la ressource d'ondes millimétriques ; et
en réponse à une présence d'interférence, acquérir un nouveau point de fréquence d'un signal de l'oscillateur local correspondant à un point de fréquence sans interférence d'un signal de fréquence intermédiaire, et commander l'unité de commande de l'oscillateur local afin d'ajuster par adaptation le point de fréquence du signal de l'oscillateur local à partir d'un point de fréquence par défaut du signal de l'oscillateur local jusqu'au nouveau point de fréquence.

7. Dispositif terminal comprenant un module de carte mère (2), une ligne de transmission de fréquence intermédiaire (4), un module d'ondes millimétriques (3) et le système de commande de l'oscillateur local (1) selon la revendication 6, dans lequel des signaux de fréquence intermédiaire sont transmis entre le module de carte mère (2) et le module d'ondes millimétriques (3) par l'intermédiaire de la ligne de transmission de fréquence intermédiaire (4) ; et
le système de commande de l'oscillateur local (1) est configuré pour : en réponse à la réception d'un signal en bande de base par le module de carte mère (2), mélanger un premier signal de l'oscillateur local au signal en bande de base pour former un signal de fréquence intermédiaire ; en réponse à la réception d'un signal de fréquence intermédiaire par le module de carte mère (2), mélanger le premier signal de l'oscillateur local au signal de fréquence intermédiaire reçu pour former un signal en bande de base ; en réponse à la réception par le module d'ondes millimétriques (3) d'un signal de fréquence intermédiaire transmis par le module de carte mère (2), mélanger un deuxième signal de l'oscillateur local avec le signal de fréquence intermédiaire pour former un signal d'ondes millimétriques ; et, en réponse à la réception par le module d'ondes millimétriques (2) d'un signal d'ondes millimétriques, mélanger le deuxième signal de l'oscillateur local avec le signal d'ondes millimétriques pour former un signal de fréquence intermédiaire.

8. Terminal selon la revendication 7, dans lequel la ligne de transmission de fréquence intermédiaire (4) comprend un câble coaxial ou un circuit imprimé flexible.

9. Support de stockage lisible par ordinateur configuré pour stocker des programmes exécutables qui, lorsqu'ils sont exécutés par un processeur, amènent ce dernier à mettre en œuvre la méthode de commande de l'oscillateur local selon l'une quelconque des revendications 1 à 4 ou la méthode d'émission-réception de signal selon la revendication 5.

10. Dispositif électronique, comprenant :
un module de stockage dans lequel sont stockés les premiers programmes d'application et/ou les deuxièmes programmes d'application, et
un ou plusieurs premiers processeurs, dans lesquels les premiers programmes d'application, lorsqu'ils sont exécutés par le ou les premiers processeurs, amènent le ou les premiers processeurs à mettre en œuvre la méthode de commande de l'oscillateur local selon l'une quelconque des revendications 1 à 4, et les deuxièmes programmes d'application, lorsqu'ils sont exécutés par le ou les premiers processeurs, amènent le ou les premiers processeurs à mettre en œuvre la méthode de transmission de signaux selon la revendication 5.
